(19)

Europäisches
Patentamt
European
Patent Office
Office européen
des brevets

(11) **EP 3 270 594 A1**

(12) **EUROPEAN PATENT APPLICATION**

(43) Date of publication:
**17.01.2018 Bulletin 2018/03**

(21) Application number: **16305918.1**

(22) Date of filing: **15.07.2016**

(51) Int Cl.:
*H04N 19/176* (2014.01)     *H04N 19/147* (2014.01)
*H04N 19/13* (2014.01)      *H04N 19/12* (2014.01)
*H04N 19/463* (2014.01)     *H04N 19/132* (2014.01)
*H04N 19/18* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LASSERRE, Sébastien**
  **35576 Cesson Sévigné (FR)**
• **PURI, Saurabh**
  **35576 Cesson Sévigné (FR)**
• **LE CALLET, Patrick**
  **35576 Cesson Sévigné (FR)**

(74) Representative: **Huchet, Anne**
  **TECHNICOLOR**
  **1-5, rue Jeanne d'Arc**
  **92130 Issy-les-Moulineaux (FR)**

(54) **METHOD AND APPARATUS FOR ADVANCED CABAC CONTEXT ADAPTATION FOR LAST COEFFICIENT CODING**

(57)     Coding of the last coded coefficient position is performed by basing the coding of the y coordinate of the position of the last coded coefficient on the x coordinate value of the last coded coefficient. This enables the context adaptive coding of the last coded coefficient pa- rameter much more efficient. In an embodiment, a partial transform is used to code a block of image values. The partial transform enables further efficiencies in coding of the last coded coefficient.

1100    Start    1101

Transform
Image Values    1110

Entropy code
Last Coded Coeff
Using x to code y    1120

**Figure 11**

EP 3 270 594 A1

**Description**

TECHNICAL FIELD

The present principles relate to video compression and decompression systems generally and, more particularly to block based transforms.

BACKGROUND

A transform $T$ transforms a block of n pixels into n transformed coefficients. The process is invertible by applying the inverse transform $T^{-1}$ to the transformed coefficients to get the pixel values back

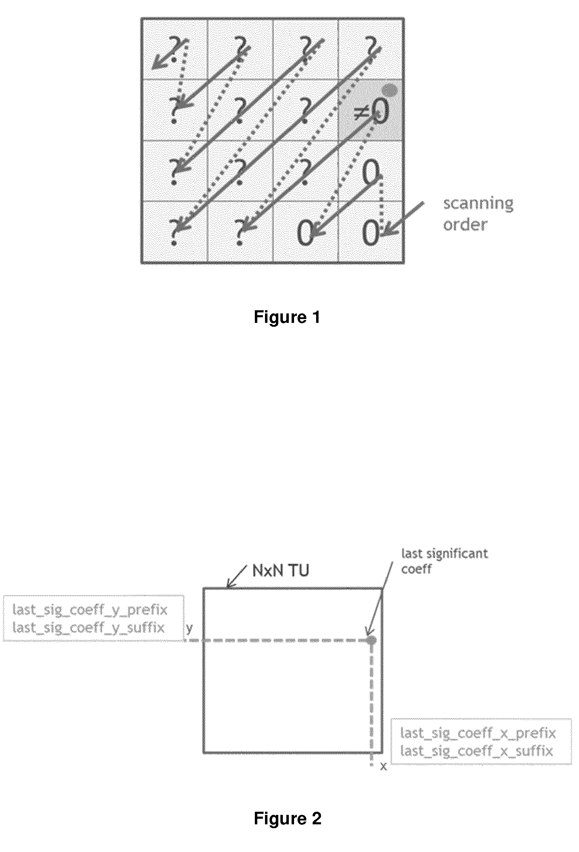

In some video coding standards, transformed coefficients are put into a two dimensional (2D) block to which is associated a scanning order; typically, from high frequency to low frequency. After quantization of the coefficients, the first, relative to the high to low frequency scan order, non-zero quantized coefficient is called the last coded coefficient, as shown on Figure 1.

In the 2D block topology associated to the coefficients, the last coded coefficient has two coordinates (x,y) as shown on Figure 2 for a block of size n=NxN.

By definition, 0≤x,y≤N-1. These two coordinates are coded into the bit-stream as information to determine the non-zero coded coefficients on the decoder side. At the least, these coordinates indicate that the coefficient of coordinate (x,y) is not zero, and the coefficients coming after this coefficient, relative to the low to high scanning order, are all zero.

Additional information indicating significance of transformed coefficients may be added to signal whether the remaining coefficients (question-marked on Figure 1) are zero or not.

Conventionally, in many video and image codecs developed in the last decades, fixed transforms, such as the Discrete Cosine Transform or Discrete Sine Transform, for example, are applied to the pixels of each block to obtain the transformed coefficients. These coefficients are then quantized by a quantifier Q to obtain quantized coefficients which are encoded by an entropy coder, such as VLC, arithmetic coder, or Context Adaptive Binary Arithmetic Coding (CABAC), for example.

It is desired to encode the last coded coefficient position as efficiently as possible.

The HEVC/H.265 standard introduced the coding of the last coded coefficient position by using two coordinates (x,y). Each coordinate is binarized using a truncated unary code, and then each bit, or "bin" in the HEVC terminology, is encoded using CABAC with channel adaptation based on contexts. In HEVC, the two coordinates x and y are encoded and decoded separately.

SUMMARY

These and other drawbacks and disadvantages of the prior art are addressed by the present principles, which are directed to a method and apparatus for advanced CABAC context adaptation for last coefficient coding.

According to one aspect of the present principles, a method for coding a set of transformed coefficients is provided comprising a step of transforming a block of image values to obtain transformed coefficients, and a set of entropy coding a position of a last coded coefficient wherein the position of the last coded coefficient is provided by two coordinates such that the entropy coding of the y coordinate depends on the value of the x coordinate.

According to another aspect of the present principles, an apparatus for coding a set of transformed coefficients is provided comprising a transform circuit operating on a block of image values to obtain transformed coefficients, and an entropy coder wherein the position of a last coded coefficient of the transformed coefficients is provided by two coordinates such that the entropy coding of the y coordinate depends on the value of the x coordinate.

According to another aspect of the present principles, a method is provided for decoding a set of transformed coefficients. The method comprises entropy decoding the transformed coefficients to generate a position of a last coded coefficient, wherein the position of the last coded coefficient is provided by two coordinates (x,y) characterized in that said entropy decoding of a y coordinate depends on the value of an x coordinate, and a step of inverse transforming transformed coefficients to obtain a block of image values.

According to another aspect of the present principles, an apparatus is provided for decoding a set of transformed coefficients. The apparatus comprises an entropy decoder that operates on a code representing a position of a last coded coefficient from the transformed coefficients, wherein the position of the last coded coefficient is provided by two coordinates (x,y) characterized in that the entropy coding of a y coordinate depends on the value of an x coordinate. The apparatus further comprises an inverse transform circuit operating on transformed coefficients to obtain a block of image values.

According to another aspect of the present principles, a non-transitory computer readable storage medium is provided having stored thereon instructions for decoding a set of transformed coefficients such that the position of the last coded coefficient is provided by two coordinates (x,y) characterized in that an entropy coding of a y coordinate depends on the value of an x coordinate.

According to another aspect of the present principles, a non-transitory computer readable storage medium is provided having stored thereon a bitstream for decoding a set of transformed coefficients such that the position of the last coded coefficient is provided by two coordinates (x,y) characterized in that an entropy coding of a y coordinate depends on the value of an x coordinate.

These and other aspects, features and advantages of the present principles will become apparent from the following detailed description of exemplary embodiments, which are to be read in connection with the accompanying drawings.

## BRIEF DESCRIPTION OF THE DRAWINGS

Figure 1 shows the scanning order of a transform unit.

Figure 2 shows an example of coordinates for a last coded coefficient.

Figure 3 shows an example of coding in a 4x4 transform unit with twelve coefficients.

Figure 4 shows suffix and prefix determination for a coordinate value.

Figure 5 shows an on-the-fly learning scheme.

Figure 6 shows the BD-rate gain versus the number of transform vectors for various scenes.

Figure 7 shows coding for an 8x8 block with a partial transform.

Figure 8 shows the structure of a context value.

Figure 9 shows the evolution of a context value.

Figure 10 shows an example of context choice depending on neighboring channels.

Figure 11 shows one embodiment of a method for coding a set of transformed coefficients using the present principles.

Figure 12 shows one embodiment of an apparatus for coding a set of transformed coefficients using the present principles.

Figure 13 shows one embodiment of a method for decoding a set of transformed coefficients using the present principles.

Figure 14 shows one embodiment of an apparatus for decoding a set of transformed coefficients using the present principles.

## DETAILED DESCRIPTION

The technical problem solved by the following embodiments is to reduce the cost of coding the position of the last coded coefficient in a transformed block of pixels to which a 2D transform has been applied.

These embodiments are an improvement of the entropy coding scheme commonly used in video coding standards. One such video coding standard is the HEVC/H.265 standard, but the embodiments are not limited to that standard.

The main idea of the present principles is to choose the contexts used to code the coordinate y depending on the value x. This is obviously decodable as one decodes x first, then y. This leads to better coding performance because prior methods do not take into account the dependence between x and y. For instance, the described idea specifically helps coding blocks with one DC coefficient only (x=y=0) relative to blocks with more coefficients in the case x=0 and y>0. In brief, the y channel statistics are better modeled.

In particular, if one uses partial transforms, it implicitly takes into account the fact that not all coordinate pairs (x,y) are acceptable, such that the coding of (x,y) is more efficient. In this particular embodiment with partial transforms, tests have been conducted on a modified HEVC standard using partial transforms and it has been shown that an improved coding of (x,y) leads to a compression gain of about -0.5%

The ideas presented herein propose to infer the context used to code y bins depending on the value of x.

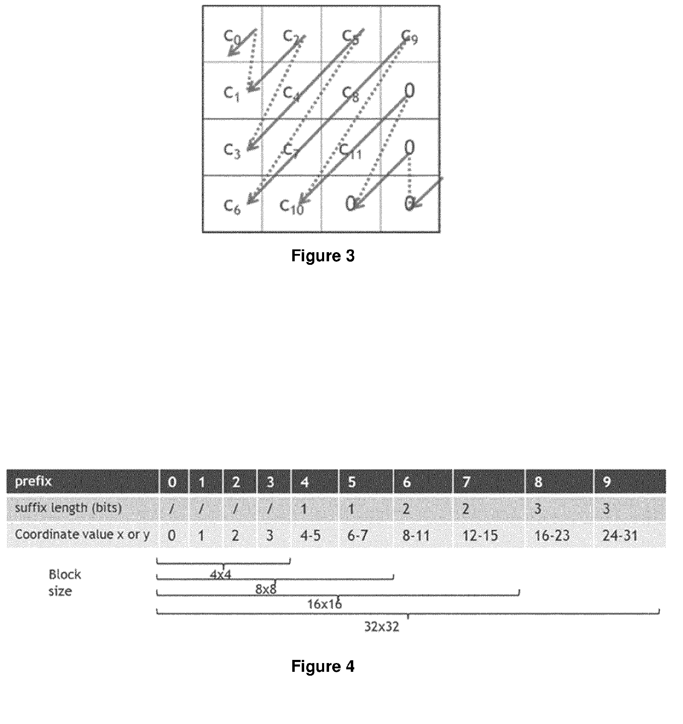

For instance, as in Figure 3, consider a 4x4 TU whose last coded coefficient position is $C_{11}$. In this case, one has x=2 and y=2.

Once x is coded as in HEVC, the context of y will depend on x. In the example above, the value y=2 is binarized by 001 using a unary code and each of the three bins is coded using dedicated contexts Co, $C_1$ and $C_2$. In HEVC, the contexts do not depend on x, such that $C_0$ is representative of the probability P(y=0) that y is zero. Under the present principles, this context is replaced by $C_{0,x=2}$ that depends on x, such that it is representative of the probability P(y=0|x=2) instead.

This requires an increase of the number contexts used by the codec. In a variant, these increases may be limited by inferring the y contexts, not by the precise value of x, but by a range of values for x. For instance $C_{i,x=0}$ is chosen depending on whether or not x is zero. Also, this inference can be effective for a limited number of bins, for instance the first few indexes i only.

In HEVC, a coordinate x or y is split into a prefix and a suffix as shown in Figure 4.

For instance, if the coordinate value is 14, the prefix is 7 and the suffix is coded in 2 bits. The suffix is the remainder after the first value is subtracted from the coordinate value, 14-12 =2. If the coordinate value is 3, then the prefix is 3, but there is no suffix.

The prefix is binarized using a truncated unary coding. The truncation is performed based on the knowledge of the block size that provides an upper bound for the prefix value. Each bit of the binarized prefix is encoded using CABAC and a dedicated context.

For instance, in a 4x4 block the possible prefix are 0, 1, 2 or 3 which are respectively binarized into 1, 01, 001 and 000 (truncated). In another example, in a 8x8 block, the possible prefix are from 0 to 5 and binarized into 1, 01, 001, 0001, 00001 and 00000 (truncated).

The suffix is binarized using a fixed length coding, and the fixed length suffix is encoded as is, using CABAC in bypass mode without using contexts.

For instance, if the coordinate value is 14 in a 16x16 block, the prefix is 7 (binarized into 0000000) and the suffix is 2 (binarized into 10 and coded on 2 bits).

The binarization process into prefix and suffix is kept as in HEVC, using contexts only for the prefix. The main characteristic of the present principles is that the contexts of y depend on the value of x. Of course, this works only for the prefix of y because the suffix is coded without using any context (a bypassed CABAC is used instead). Nothing is changed for the suffix.

Usually, a transform $T$ transforms a block of n pixels into m=n transformed coefficients. The process is invertible by applying the inverse transform $T^{-1}$ to the transformed coefficients to get the pixel values back. In case of a partial transform P, the n pixels are transform into less m<n transformed coefficients. Equivalently, it may be assumed the lacking m-n coefficients are set to zero. An "inverse" transform $P'$ (of course not the mathematical inverse because the partial transform is not invertible) is applied to the transformed coefficient to obtain an approximation of the initial pixel values. Typically, partially transformed coefficients are representative of the low frequency information of the pixel block.

If a partial transform is used, it is known that some m-n transformed coefficients are necessarily zero, thus imposing some constraints on the position of the last coded coefficient and on the coordinates (x,y). In this case, by implicitly using these constraints, it is shown that the embodiment automatically handles the efficient encoding of the two coordinates (x,y) in case a partial transform is used to transform the TU pixels to transformed coefficients.

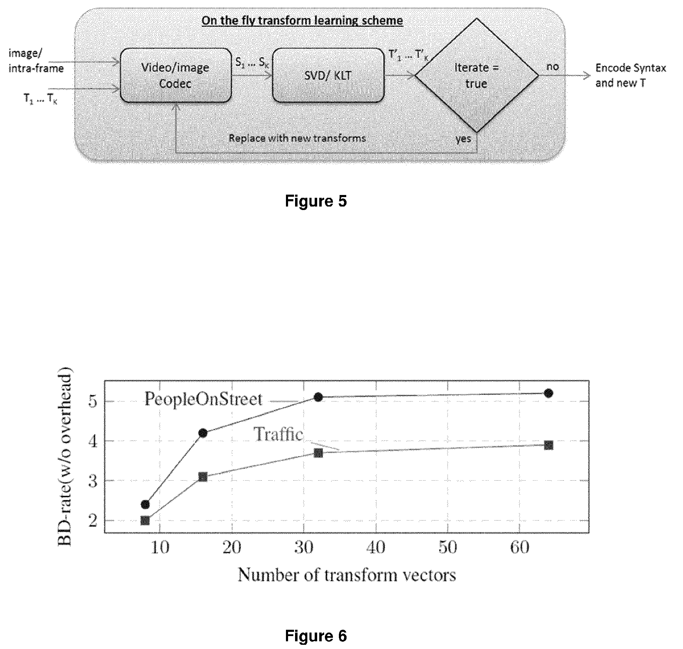

Instead of the systematic transforms such as DCT or DST, an adaptive set of orthogonal transforms may be used instead that are learned offline on a large training set using different classification and transform optimization schemes. This set of transforms is fed to a codec and the best transform out of a set is chosen in a Rate Distortion Optimization (RDO) loop. A more adaptive approach is to learn a set of orthogonal transforms for a particular intra frame of a sequence. This is referred to as an on-the-fly block based transform learning scheme in the rest of the specification. This scheme is shown in Figure 5.

The block diagram of Figure 5 shows a typical on-the-fly scheme in which the algorithm is split into two parts, i.e. classification of the residual blocks inside the video/image codec and generation of the new set of transforms. The first step classifies the residual blocks into K different classes ($S_1 ... S_K$). In the second step, a new transform is obtained for each class using minimization of the reconstruction error for that particular class. Typically, Singular Value Decomposition (SVD) and (Karhunen-Loève Transform) KLT are used to generate an orthogonal set of transforms. These two steps are iterated until convergence of the solution or a stop criterion is reached. As seen in the block diagram, the input to the system is an intra frame or an image along with some initial set of non-separable orthogonal transforms ($T_1...T_K$). The system outputs a set of learned transforms ($T'_1... T'_K$) along with the syntax information that need to be encoded into the bit-stream which is sent to the decoder. In general, the overhead bits required to encode these transform basis vectors is significantly large compared to the bits required to encode the frame.

Due to the energy compaction property of SVD, it is observed that the overhead cost can be considerably reduced by deducing an incomplete representation of the learned transform where, only first 'm' vectors are transmitted to the decoder and the remaining (n - m) transform vectors are either generated using a completion algorithm similar to the Gram-Schmidt method or forced to zero, thus leading to a partial transform.

In order to illustrate the effect of dropping the last few vectors of a transform on the Bjontegaard Distortion rate (BD-rate), four non-separable optimized transforms of size 64x64 are learned on the 4K sequences 'PeopleOnStreet' and 'Traffic'. Encoding tests are performed on these sequences where the first 'm' vectors are retained and the rest of the basis vectors are then completed using a completion algorithm. Figure 6 shows the variation of the performance gain with respect to the number of coded basis vectors. The vertical axis is the percentage gain relative to the anchor (HEVC test software HM15.0) and without taking the transform cost into account.

It is observed in Figure 2 that by retaining just the first half of the transform vectors i.e. m = 32, there is negligible performance drop in terms of BD-rate. For the case of m = 16, i.e. when only first 16 basis vectors are coded, the performance drops by 1% compared to the overall bit-rate obtained by coding all 'n' basis vectors, but the overhead cost of transform vectors reduces to one fourth of the total overhead. For m = 8, there is considerable loss of performance in terms of BD-rate performance but also reduces the overhead further. In general, this shows that there exists a trade-off between the performance loss and the overhead cost.

Since, the performance drop in terms of BD-rate when encoding only first 'm' transform vectors depends on the video content, a content-adaptive method is necessary to estimate the optimal value of 'm'. Intuitively, at low bit-rates, most of the coefficients are quantized to zero and at high bit rate, the coefficients' energy is significant even at high frequencies. Therefore, the value of 'm' depends on the content as well as the quantization parameter QP.

The residual signal energy on the average is concentrated more in the first few coefficients where, the DC coefficient has on the average maximum energy and it decreases as we go towards the higher frequency coefficients. Therefore, most of the high frequency coefficients are quantized to zero. A simple threshold based method can be applied in order to compute the best value of 'm' which is required to be coded along with the frame as an overhead.

Let E be the sum of energy of the DCT coefficients. A threshold t is defined by the multiplication of a parameter p with E to get,

$$t = p \cdot E$$

The value of 'm' can simply be computed from the number of coefficients with average energy greater than this threshold. The value of 'p' can be found experimentally. Table 1 shows the variation of the number of vectors 'm' above this threshold for a chosen value of 'p' in terms of percentage of total number of vectors that are encoded. It is observed from Table 1 that at high QP, the average number of vectors required are much less compared to that required at low QP. Moreover, the number of vectors 'm' also varies depending on the content.

**Table 1: Number of vectors to encode vs threshold for different sequences**

| QP | 'p' | Percentage of total number of vectors to encode (in %) | | | |
|----|-----|----------------|---------|--------|----------------|
|    |     | PeopleOnStreet | Traffic | Nebuta | SteamLocomotive |
| 22 | 0.01  | 0.23 | 0.24 | 0.30 | 0.32 |
|    | 0.005 | 0.27 | 0.29 | 0.32 | 0.35 |
|    | 0.001 | 0.45 | 0.48 | 0.46 | 0.46 |
| 27 | 0.01  | 0.20 | 0.22 | 0.28 | 0.31 |
|    | 0.005 | 0.25 | 0.27 | 0.31 | 0.34 |
|    | 0.001 | 0.38 | 0.39 | 0.38 | 0.43 |
| 32 | 0.01  | 0.18 | 0.19 | 0.26 | 0.28 |
|    | 0.005 | 0.21 | 0.22 | 0.29 | 0.30 |
|    | 0.001 | 0.29 | 0.30 | 0.39 | 0.36 |
| 37 | 0.01  | 0.14 | 0.15 | 0.23 | 0.23 |
|    | 0.005 | 0.18 | 0.18 | 0.26 | 0.25 |
|    | 0.001 | 0.23 | 0.23 | 0.30 | 0.30 |

When the present principles are applied using partial transforms, the range of the y prefix depends on x and the contexts of y adapts automatically.

Consider again the example of Figure 3 using a partial transform with m=12 such that the last 16-12=4 are always zero. Now, let us suppose that for a particular TU, the last coded coefficient is $c_9$. Then the coordinates (x,y) = (3,0) if coded in HEVC become (000,0). The coordinate x is coded as in HEVC. Concerning the coordinate y, the only bit 0 of the binarization is coded using a CABAC context.

In HEVC, this context does not depend on the value of x. Instead, following the principles described herein, the contexts used for the coding of the bin for the prefix y does depend on the value of x. So, in this example, when x=3, the only possible value for the prefix y is 0 because of the partial transform that forces the other coefficients to be zero in the last column where x=3, and the coded first bit for y is 0 all the time.

As a consequence, the x=3-dependent context sees a channel with only zeros and it adapts the statistics of the channel such that after a few codings of the TU, the cost of coding a 0 becomes just negligible in term of bit-rate. This is how the context adapts implicitly to code efficiently this first bit y that, ideally, should not be coded at all because one knows from the implicit transform that x=3 infers y=0.

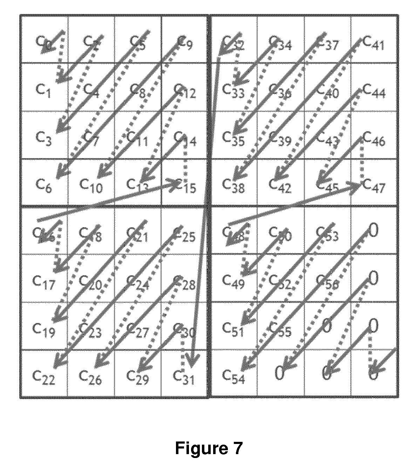

The embodiment with partial transforms easily extends to a coordinate y that uses a suffix, as in Figure 7 for an example in an 8x8 TU, using a partial transform with m=57. The first 57 transformed coefficients may be non-zero, but the last 64-57=7 coefficients are necessarily zero. Let us suppose that the last coded coefficient position is 55. This gives coordinates (x,y) = (5,6). The prefix for y is 5 and its suffix is 0. In HEVC, the suffix should be coded on 1 bit, but in our case, we know that the suffix cannot be 1 because the coefficient 58, just below the coefficient 55, is necessarily known in this case to be zero, so the suffix is not coded and one bit of coding is gained.

In the HEVC/H.265 standard, a new tool for coding binary data has been proposed in the arithmetic coder, namely the Context-Adaptive Binary Arithmetic Coding (or CABAC). A binary symbol s, which takes value 0 or 1, is coded following a probability p to be 1 and 1-p to be 0. This probability is deduced form a context and is adapted after each symbol coding.

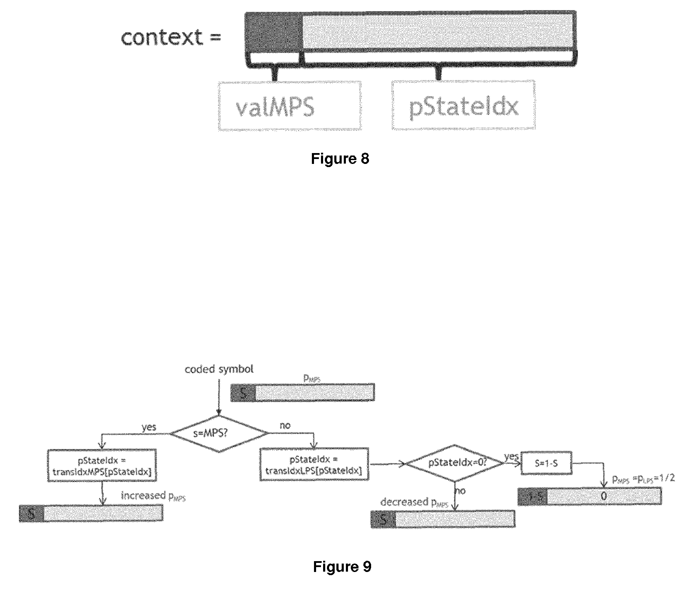

A context value is an 8 bit value, see Figure 8. The leading bit represents the Most Probable Symbol (or MPS) and the next 7 bits represent a probability p' (or state) from which the probability p is deduced.

The update of the context value is made following the process described in Figure 9, depending on whether or not the coded symbol equals the MPS.

The evolution is made through two tables, transIdxMPS if the coded symbol is the MPS, and transIdxLPS if the coded symbol is not the MPS, i.e., it is the Least Probable Symbol (LPS). These tables are provided in Table 2 for the entry p', whose name is pStateIdx.

**Table 2: tables for the evolution of the context state**

| Table 9-41 - State transition table | | | | | | | | | | | | | | | | |
|---|---|---|---|---|---|---|---|---|---|---|---|---|---|---|---|---|
| pStateIdx | 0 | 1 | 2 | 3 | 4 | 5 | 6 | 7 | 8 | 9 | 10 | 11 | 12 | 13 | 14 | 15 |
| transIdxLps | 0 | 0 | 1 | 2 | 2 | 4 | 4 | 5 | 6 | 7 | 8 | 9 | 9 | 11 | 11 | 12 |
| transIdxMps | 1 | 2 | 3 | 4 | 5 | 6 | 7 | 8 | 9 | 10 | 11 | 12 | 13 | 14 | 15 | 16 |
| pStateIdx | 16 | 17 | 18 | 19 | 20 | 21 | 22 | 23 | 24 | 25 | 26 | 27 | 28 | 29 | 30 | 31 |
| transIdxLps | 13 | 13 | 15 | 15 | 16 | 16 | 18 | 18 | 19 | 19 | 21 | 21 | 22 | 22 | 23 | 24 |
| transIdxMps | 17 | 18 | 19 | 20 | 21 | 22 | 23 | 24 | 25 | 26 | 27 | 28 | 29 | 30 | 31 | 32 |
| pStateIdx | 32 | 33 | 34 | 35 | 36 | 37 | 38 | 39 | 40 | 41 | 42 | 43 | 44 | 45 | 46 | 47 |
| transIdsLps | 24 | 25 | 26 | 26 | 27 | 27 | 28 | 29 | 29 | 30 | 30 | 30 | 31 | 32 | 32 | 33 |
| transIdxMps | 33 | 34 | 35 | 36 | 37 | 38 | 39 | 40 | 41 | 42 | 43 | 44 | 45 | 46 | 47 | 48 |
| pStateIdx | 48 | 49 | 50 | 51 | 52 | 53 | 54 | 55 | 56 | 57 | 58 | 59 | 60 | 61 | 62 | 63 |
| transIdxLps | 33 | 33 | 34 | 34 | 35 | 35 | 35 | 36 | 36 | 36 | 37 | 37 | 37 | 38 | 38 | 63 |
| transIdxMps | 49 | 50 | 51 | 52 | 53 | 54 | 55 | 56 | 57 | 58 | 59 | 60 | 61 | 62 | 62 | 63 |

The probability $p_{MPS}$ of the symbol s to be the MPS is quantized linearly on 8 bits, from 0 to 127. It is deduced from the context value by

$$p_{MPS} = (p'+64)/127 = (pStateIdx+64)/127$$

and the probability p of the symbol $s$ to be 1 is deduced obviously from $p_{MPS}$ depending on the value of the MPS.

$$p = p_{MPS} \quad \text{if MPS=1,}$$

$$p = 1-p_{MPS} \quad \text{if MPS =0.}$$

Context-Adaptive coding is a powerful tool that allows the coding to dynamically follow the statistics of the channel to which the symbol belongs. Also, each channel should have its own context in order to avoid mixing statistics and losing the benefit of the process. This has led to the extensive use of many contexts in HEVC/H.265, which uses several hundreds of contexts, in order to model many channels. For instance, among all channels using contexts, there are

- motion vector residuals,
- TU coding flags,
- Last significant coefficient position,
- Coding Group coding flags,
- Transformed coefficient significant flags,
- Transformed coefficient magnitude (greater than 1 and greater than 2) flags,
- SAO data,
- other data

All of these contexts/channels also largely depend on the color channel, that is whether the channel is luma or chroma, the Transform Unit size, the position of the transformed coefficient, the neighboring symbol values and other factors.

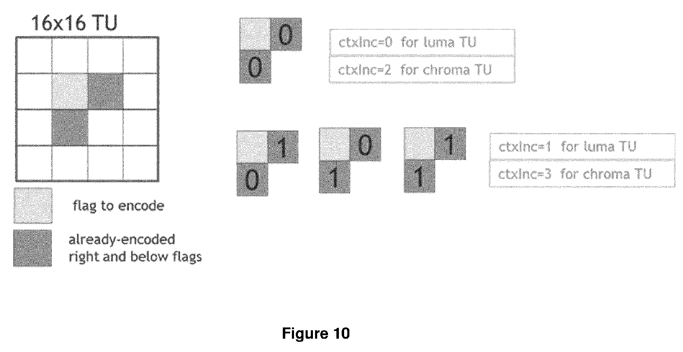

As an example, a Coding Group (CG) coding flag is chosen depending on whether or not the CG coding flags below and at the right of the current CG are 1 or not, as shown in Figure 10.

All in all, the context choice depends on many things, thus the huge number of contexts. Of course, the decoder must update the context values to correspond with what was performed on the encoder side to ensure synchronization with the encoder and parsing of the stream.

The embodiments described herein propose to add a dependency on the context choice for the coordinate y of the last coded coefficient, namely, this dependency is the value of the coordinate x. It is to be noted that this context choice also depends on (as standardized in HEVC) the color channel (luma or chroma), the TU size, and the scanning order.

There is no specific syntax needed to implement the described principles, except in the case of partial transforms that may be signaled in the bit-stream.

Regarding the decoding process, the principles described herein impact the number of contexts associated to the last coded coefficient position and the process to decode the last coded coefficient position.

In the embodiment with the partial transforms, the improved binarization and truncated unary coding of the y suffix is also impacted.

In addition to the above features of the present principles, the described embodiments provide that the entropy coding of the coordinate y is performed by CABAC and associated contexts, the dependence is an inference of the choice of the contexts by the value of x, the entropy coding of the coordinate y is performed using a prefix and a suffix, the dependence is an inference of the choice of the contexts used to code the prefix of y by the value of x, and as a variant, the transform is a partial transform and the suffix y binarization is truncated using the knowledge of the size m of the partial transform.

The proposed idea is normative in the sense that it is present in the syntax of the video stream and implies a decoding method to be applied. As such, the present ideas can be implemented in a video standard, such as the successor to HEVC.

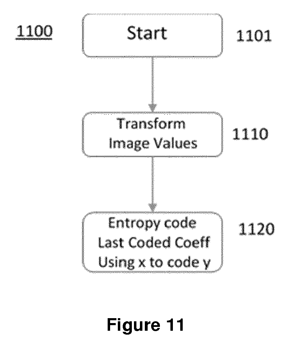

One embodiment of a method 1100 for coding a set of transformed coefficients is shown in Figure 11. The method commences at Start block 1101 and control proceeds to block 1110 for transforming a block of image values to produce transformed coefficient values. Control proceeds from block 1110 to block 1120 for entropy coding the last coded coefficient using the x coordinate to code the y coordinate.

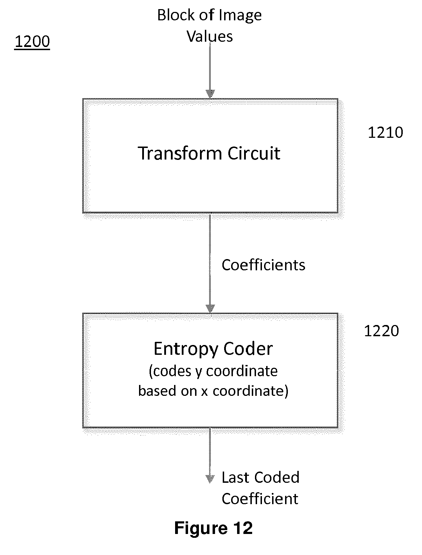

One embodiment of an apparatus 1200 for coding a set of transformed coefficients is shown in Figure 12. The apparatus comprises Transform Circuit 1210 that receives a block of image values on its input port and produces transformed coefficients on its output port. This output port of Transform Circuit 1210 is in signal connectivity with the input to Entropy Coder 1220. Entropy Coder 1220 codes the y coordinate of the last coded coefficient position based on the x coordinate of the last coded coefficient position to produce a last coded coefficient value.

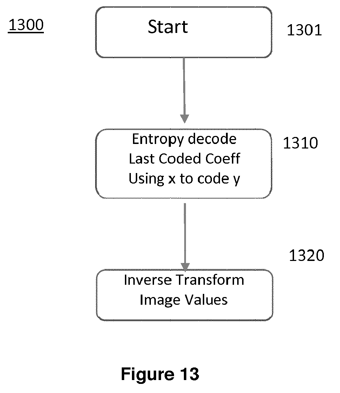

An embodiment of a method 1300 for decoding a set of transformed coefficients is shown in Figure 13. The method commences at Start block 1301 and control proceeds to block 1310 for entropy decoding a last coded coefficient using the x coordinate value to decode the y coordinate value. Control proceeds from block 1310 to block 1320 for inverse transforming coefficients to produce image values.

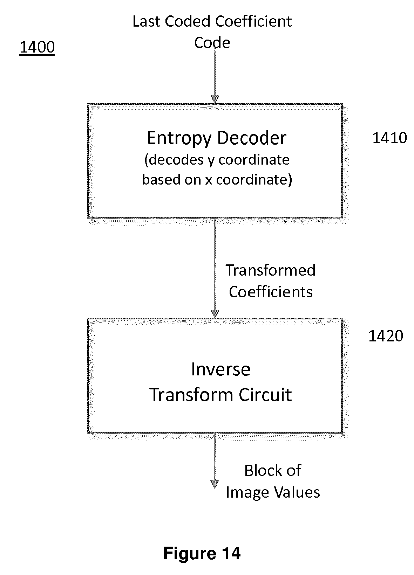

An embodiment of an apparatus 1400 for decoding a set of transformed coefficients is shown in Figure 14. The apparatus comprises Entropy Decoder 1410 that receives transform coefficients including a code for the last coded coefficient and decodes the y coordinate of the last coded coefficient based on the x coordinate. The output of Entropy Decoder 1410 is in signal connectivity with the input of Inverse Transform Circuit 1420. Inverse Transform Circuit 1420 receives the transformed coefficients on its input port and inverse transforms them to produce a block of image values on its output port.

The aforementioned embodiments can be implemented in Set Top Boxes (STBs), modems, gateways or other devices that perform video encoding or decoding.

The functions of the various elements shown in the figures can be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

**Claims**

1. A method for coding a block of transformed coefficients, comprising:

   transforming a block of image values to obtain transformed coefficients;
   entropy coding two coordinates defining a position in the block of a last non-zero transformed coefficient determined by a scanning of the transformed coefficients,

   wherein the entropy coding of one coordinate (y) of said two coordinates depends on the value of the other coordinate (x).

2. The method of Claim 1, wherein entropy coding said one coordinate (y) uses contexts which depend on the other coordinate (x).

3. The method of any preceding claim, further comprising:

splitting each of the two coordinates up into a prefix and a suffix; and,
inferring the value of the prefix of the y coordinate from the x coordinate.

4. The method of any preceding claim, wherein an adaptive set of orthogonal transforms include a partial transform used to transform the block of image values.

5. An apparatus for coding a set of transformed coefficients, comprising:

   a transform circuit operating on a block of image values to obtain transformed coefficients;
   an entropy coder that generates a code representing a position of a last coded coefficient from the transformed coefficients,

   wherein the position of the last coded coefficient is provided by two coordinates (x,y) **characterized in that** said entropy coding of a y coordinate depends on the value of an x coordinate.

6. The apparatus of Claim 5, wherein entropy coding said one coordinate (y) uses contexts which depend on the other coordinate (x).

7. The apparatus of Claim 5 or 6, wherein said entropy coder splits each of the two coordinates up into a prefix and a suffix; and infers the value of the prefix of the y coordinate from the x coordinate.

8. A method for decoding a set of transformed coefficients, comprising:

   entropy decoding the transformed coefficients to generate a position of a last coded coefficient,

   wherein the position of the last coded coefficient is provided by two coordinates (x,y) **characterized in that** said entropy decoding of a y coordinate depends on the value of an x coordinate;
   inverse transforming transformed coefficients to obtain a block of image values.

9. The method of Claim 8, wherein entropy coding said one coordinate (y) uses contexts which depend on the other coordinate (x).

10. The method of Claim 8 or 9, further comprising:

    splitting each of the two coordinates up into a prefix and a suffix; and,
    inferring the value of the prefix of the y coordinate from the x coordinate.

11. An apparatus for decoding a set of transformed coefficients, comprising:

    an entropy decoder that operates on a code representing a position of a last coded coefficient from the transformed coefficients,
    wherein the position of the last coded coefficient is provided by two coordinates (x,y) **characterized in that** said entropy coding of a y coordinate depends on the value of an x coordinate;
    an inverse transform circuit operating on transformed coefficients to obtain a block of image values.

12. The apparatus of Claim 11, wherein entropy coding said one coordinate (y) uses contexts which depend on the other coordinate (x).

13. The apparatus of Claim 11 or 12, wherein said entropy decoder splits each of the two coordinates up into a prefix and a suffix; and infers the value of the prefix of the y coordinate from the x coordinate.

14. A non-transitory computer readable storage medium having stored thereon instructions for decoding a set of transformed coefficients according to the method of any one of claims 8 to 10, or for encoding a set of transformed coefficients according to the method of any one of claims 1 to 3.

15. A non-transitory computer readable storage medium having stored thereon a bitstream according to the method of any one of claims 8 to 10.

**Figure 1**

**Figure 2**

**Figure 3**

| prefix | 0 | 1 | 2 | 3 | 4 | 5 | 6 | 7 | 8 | 9 |
|---|---|---|---|---|---|---|---|---|---|---|
| suffix length (bits) | / | / | / | / | 1 | 1 | 2 | 2 | 3 | 3 |
| Coordinate value x or y | 0 | 1 | 2 | 3 | 4-5 | 6-7 | 8-11 | 12-15 | 16-23 | 24-31 |

Block size

4x4
8x8
16x16
32x32

**Figure 4**

**Figure 5**

**Figure 6**

**Figure 7**

context =

valMPS   pStateIdx

**Figure 8**

coded symbol

$p_{MPS}$

S

yes —— s=MPS? —— no

pStateIdx = transIdxMPS[pStateIdx]

increased $p_{MPS}$

S

pStateIdx = transIdxLPS[pStateIdx]

pStateIdx=0?   yes   S=1-S

decreased $p_{MPS}$   no

$p_{MPS}=p_{LPS}=1/2$

S   0

**Figure 9**

16x16 TU

flag to encode

already-encoded
right and below flags

ctxInc=0  for luma TU
ctxInc=2  for chroma TU

ctxInc=1  for luma TU
ctxInc=3  for chroma TU

**Figure 10**

1100    Start    1101

Transform
Image Values    1110

Entropy code
Last Coded Coeff
Using x to code y    1120

**Figure 11**

1200

Block of Image
Values

Transform Circuit

1210

Coefficients

Entropy Coder
(codes y coordinate
based on x coordinate)

1220

Last Coded
Coefficient

**Figure 12**

1300

Start
1301

Entropy decode
Last Coded Coeff
Using x to code y
1310

1320

Inverse Transform
Image Values

**Figure 13**

Last Coded Coefficient
1400                Code

```
┌─────────────────────────────┐
│       Entropy Decoder       │      1410
│      (decodes y coordinate  │
│      based on x coordinate) │
└─────────────────────────────┘
```

Transformed
Coefficients

```
┌─────────────────────────────┐      1420
│          Inverse            │
│      Transform Circuit      │
│                             │
└─────────────────────────────┘
```

Block of
Image Values

**Figure 14**

Europäisches
Patentamt

European
Patent Office

Office européen
des brevets

## EUROPEAN SEARCH REPORT

Application Number

EP 16 30 5918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/139192 A2 (RESEARCH IN MOTION LTD [CA]; HE DAKE [CA]; WANG JING [CA]) 18 October 2012 (2012-10-18) | 1-3,5-15 | INV. H04N19/176 H04N19/147 |
| Y | * abstract * * paragraphs [0052] - [0054], [0066] - [0068], [0080] - [0084]; figure 8 * | 4 | H04N19/13 H04N19/12 H04N19/463 H04N19/132 |
| A | WO 2013/070610 A1 (QUALCOMM INC [US]) 16 May 2013 (2013-05-16) * abstract * * paragraphs [0051], [0057], [0063] - [0067], [0103] * | 1-15 | H04N19/18 |
| Y | FULDSETH A ET AL: "CE10: Core transform design for HEVC", 97. MPEG MEETING; 18-7-2011 - 22-7-2011; TORINO; (MOTION PICTURE EXPERT GROUP OR ISO/IEC JTC1/SC29/WG11),, no. m20876, 15 July 2011 (2011-07-15), XP030049439, * abstract * * Section 4.1 * | 4 | |

TECHNICAL FIELDS
SEARCHED (IPC)

H04N

The present search report has been drawn up for all claims

| Place of search | Date of completion of the search | Examiner |
|---|---|---|
| The Hague | 12 January 2017 | Colesanti, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 5918

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2017

| Patent document cited in search report | | Publication date | Patent family member(s) | | Publication date |
|---|---|---|---|---|---|
| WO 2012139192 | A2 | 18-10-2012 | CA | 2832086 A1 | 18-10-2012 |
| | | | CN | 103597838 A | 19-02-2014 |
| | | | EP | 2697974 A2 | 19-02-2014 |
| | | | KR | 20130140190 A | 23-12-2013 |
| | | | WO | 2012139192 A2 | 18-10-2012 |
| WO 2013070610 | A1 | 16-05-2013 | AU | 2012336023 A1 | 22-05-2014 |
| | | | CA | 2854816 A1 | 16-05-2013 |
| | | | CN | 104025457 A | 03-09-2014 |
| | | | EP | 2777163 A1 | 17-09-2014 |
| | | | JP | 5955974 B2 | 20-07-2016 |
| | | | JP | 2015502080 A | 19-01-2015 |
| | | | KR | 20140098120 A | 07-08-2014 |
| | | | RU | 2014123383 A | 20-12-2015 |
| | | | SG | 11201401614T A | 30-07-2014 |
| | | | US | 2013114676 A1 | 09-05-2013 |
| | | | WO | 2013070610 A1 | 16-05-2013 |

EPO FORM P0459

For more details about this annex : see Official Journal of the European Patent Office, No. 12/82